# EUROPÄISCHE PATENTANMELDUNG

(11) **EP 1 473 637 A1**
(43) Veröffentlichungstag der Anmeldung: **03.11.2004**
(21) Anmeldenummer: 03252724.4
(22) Anmeldetag: 30.04.2003
(51) Int. Cl.: G06F 13/40

(54) **Einrichtung sowie Verfahren zur Kopplung von Steuereinheiten mit gemeinsamen Speichereinheiten**

(71) Anmelder: Siemens Aktiengesellschaft, 80333 München (DE)
(72) Erfinder: Barnish, Andrew, HP3 9WN, Hemel Hampstead (GB); Hauber, Stefan, 82041 Oberhaching (DE); Heine, Peter, 80689 München (DE); Meadows, David, Hants, Southampton, SO16 4LN (GB); Roth, Oskar, 81671 München (DE)

(57) **Zusammenfassung**

Die Erfindung betrifft eine Einrichtung, insbesondere Brückeneinrichtung, sowie ein Verfahren, zur Kopplung zumindest einer aktiven, insbesondere als Master funktionierenden Einrichtung sowie einer Vielzahl von passiven, insbesondere als Slave funktionierenden, Einrichtungen, sind eine Vielzahl von FIFO-Einrichtungen enthalten. Zudem weist sie zumindest eine erste jeweils einem Master zugeordnete erste Schnittstelleneinrichtung sowie zumindest eine zweite jeweils einem Slave zugeordnete Schnittstelleneinrichtung auf, wobei ein Eingang einer FIFO-Einrichtung jeweils mit genau einer der ersten Schnittstelleneinrichtungen oder einer der zweiten Schnittstelleinrichtungen verbunden und wobei am Ausgang der FIFO-Einrichtungen anstehende Daten allen mit ihnen verbundenen Arbitrierungseinrichtungen zur Verfügung stehen. Hierbei sind die Arbitrierungseinrichtungen derart ausgestaltet, dass aufgrund einer Auswertung zumindest eines Teils dieser Daten, eine Arbitrierungseinrichtung zur Aktivierung bestimmt wird.

## Beschreibung

Die Erfindung betrifft eine Einrichtung zur Kopplung zumindest einer Mastereinrichtung mit einer Vielzahl von Slaveeinrichtungen eines Kommunikationssystems gemäß dem Oberbegriff des Anspruchs 1 sowie ein Verfahren zur Kopplung zumindest einer Mastereinrichtung mit einer Vielzahl von Slaveeinrichtungen eines Kommunikationssystems gemäß dem Oberbegriff des Anspruchs 7.

In der Informations- und Telekommunikationstechnik ist die Segmentierung und sukzessive Übertragung von zu übertragenden Nutzdaten bekannt. Des Weiteren ist es bekannt, diesen Datensegmenten, im Allgemeinen als Datenpakete bezeichnet, neben den Nutzdaten bzw. Nutzinformationen jeweils noch Steuerinformationen anzuhängen, wie beispielsweise die Adressierung, Sendefolge, Flusskontrolle und Fehlerkorrektur, so dass die Datenpakete dem richtigen Empfänger zugeordnet werden können sowie nach erfolgter Übertragung empfangsseitig eine etwaige Fehlerbehandlung durchgeführt und die Datenpakete - Datensegmente - wieder korrekt zusammengesetzt werden können.

Wenn ein derartiges Datenpaket, bevor es über einen physikalischen Kanal übertragen wird, verschiedene Schichten durchläuft, denen wiederum jeweils Protokolle zugeordnet sind - wie es beispielsweise gemäß dem OSI-Referenzmodell vorgesehen ist - werden die Nutzdaten eines Datenpaketes zumeist in mehreren den einzelnen Schichten bzw. Protokollen zugeordneten Steuerinformationen gekapselt.

In derartigen paketdatenorientierten Netzwerken werden die hierfür erforderlichen Prozesse (packet processing) - d.h. beispielsweise ein Routing nach dem Internet Protokoll (IP) oder generell eine Protokollumsetzung - durch zentrale Paketserver (central packet servers) abgewickelt.

Nachteilig hierbei ist, dass diese Netzwerke im Allgemeinen ein hohes (Daten-)Verkehrsaufkommen aufweisen, so dass an die zentralen Server hohe Anforderungen bezüglich dem Datendurchsatz gestellt werden. Hinzu kommt, dass die Server im Allgemeinen auch gezwungen sind, eine geforderte Dienstgüte, wie beispielsweise Mindestdatenraten oder maximale Laufzeiten für bestimmte Dienste, zu gewährleisten.

Als Lösung ist aus der deutschen Patentanmeldung mit dem amtlichen Aktenzeichen 10310121.7 hierzu beispielsweise ein Paketserver bekannt, bei dem zwei zentrale autonom arbeitende Steuereinheiten über eine Brückeneinrichtung wahlweise auf drei Speichereinrichtungen zugreifen können.

Die der Erfindung zugrundeliegende Aufgabe ist es, eine Einrichtung sowie ein Verfahren anzugeben, mit der eine derartige Brückeneinrichtung realisiert werden kann.

Diese Aufgabe wird ausgehend von der Einrichtung zur Kopplung zumindest einer Mastereinrichtung mit einer Vielzahl von Slaveeinrichtungen eines Kommunikationssystems gemäß dem Oberbegriff des Anspruchs 1 durch dessen kennzeichnenden Merkmale sowie ausgehend von dem Verfahren zur Kopplung zumindest einer Mastereinrichtung mit einer Vielzahl von Slaveeinrichtungen eines Kommunikationssystems gemäß dem Oberbegriff des Anspruchs 7 durch dessen kennzeichnenden Merkmale gelöst.

Bei der erfindungsgemäßen Brückeneinrichtung zur Kopplung zumindest einer aktiven, insbesondere als Master funktionierenden Einrichtung sowie einer Vielzahl von passiven, insbesondere als Slave funktionierenden, Einrichtungen, sind eine Vielzahl von FIFO-Einrichtungen enthalten. Zudem weist sie eine erste jeweils einem Master zugeordnete erste Schnittstelleneinrichtung sowie eine zweite jeweils einem Slave zugeordnete Schnittstelleneinrichtung auf, wobei ein Eingang einer FIFO-Einrichtung jeweils mit genau einer der ersten Schnittstelleneinrichtungen oder einer der zweiten Schnittstelleneinrichtungen verbunden ist und wobei am Ausgang der FIFO-Einrichtungen anstehende Daten allen mit ihnen verbundenen Arbitrierungseinrichtungen zur Verfügung stehen. Hierbei sind die Arbitrierungseinrichtungen derart ausgestaltet, dass aufgrund einer Auswertung zumindest eines Teils dieser Daten, eine Arbitrierungseinrichtung zur Aktivierung bestimmt wird.

Durch die erfindungsgemäße Einrichtung, die insbesondere als Brückeneinrichtung, beispielsweise auf einer Serverkarte, ausgestaltet ist, wird ein blockierungsfreier Zugriff von Mastereinrichtungen, wie beispielsweise einer CPU, auf Slaveeinrichtungen, wie beispielsweise einer oder mehreren Speichereinrichtungen, ermöglicht. Zugriffe werde zudem gespeichert. D.h. eine erste Schnittstelleneinrichtung kann freigegeben werden, bevor ein Zugriff auf eine zweite Schnittstelleneinrichtung beendet worden ist. Somit ist eine effizientere Nutzung der Systemressourcen realisiert. Die Struktur ermöglicht dabei eine strenge Einhaltung der Zugriffsreihenfolge, so dass ein strukturierter Zugriff erzielt wird. Darüber hinaus erlaubt die erfindungsgemäße Brückeneinrichtung durch ihre Architektur eine beliebige Skalierbarkeit innerhalb eines sie einsetzenden Systems. D.h. es können beliebig viele Master mit Slaves über die Brückeneinrichtung angeschlossen werden und vor allem blockierungsfrei kommunizieren.

Vorzugsweise wird dafür der eindeutig zugeordnete Eingang der jeweiligen FIFO-Einrichtung als Eingang der Brückeneinrichtung und zumindest ein Ausgang der Arbitrierungseinrichtung als Ausgang der Brückeneinrichtung ausgestaltet, wobei zumindest eine Arbitrierungseinrichtung in die erste Schnittstelleneinrichtung und/oder zweite Schnittstelleneinrichtung integriert ist, so dass Verdichtung - mitsamt daraus resultierenden Vorteile - zusammengehöriger Bausteine erfolgt.

Vorzugsweise ist die FIFO-Einrichtung derart ausgestaltet, dass für einen Zugriff auf die zweiten Schnittstelleinrichtungen Nutzdaten gespeichert werden, wobei vorteilhafter Weise die FIFO-Einrichtung zudem derart ausgestaltet ist, dass für einen Zugriff auf die zweiten Schnittstelleinrichtungen Steuerdaten gespeichert werden, so dass eine für einen Zugriff auf Slaves erforderliche Steuerungen durchgeführt und die zu übertragenden Daten zur Verfügung stehen.

Sind die erste Schnittstelleneinrichtung und zweite Schnittstelleneinrichtungen derart ausgestaltet, dass sie sowohl als Master als auch Slave funktionierende Einrichtungen an die Brückeneinrichtung koppeln, können auch Einrichtungen mit der Brückeneinrichtung betrieben werden, die zwischen Master und Slaverolle wechseln, wie beispielsweise ein PCI-Bus Controller.

Bei dem erfindungsgemäßen Verfahren zur Kopplung zumindest einer aktiven, insbesondere als Master funktionierenden Einrichtung sowie einer Vielzahl von passiven, insbesondere als Slave funktionierenden, Einrichtungen wird in einer Brückeneinrichtung jedem Master zumindest eine erste Schnittstelleinrichtung sowie jedem Slave zumindest eine zweite Schnittstelleneinrichtung zugeordnet. Des Weiteren wird ein Eingang einer FIFO-Einrichtung genau einer ersten Schnittstelleneinrichtung oder zweiten Schnittstelleneinrichtung zugeordnet. Jeder Ausgang der FIFO-Einrichtung wird zudem mit zumindest einer Einrichtung zur Arbitrierung verbunden, wobei zu verarbeitende Daten am Ausgang allen verbundenen Arbitrierungseinrichtungen zur Verfügung stehen und wobei eine für die Verteilung der Daten vorgesehene Arbitrierungseinrichtung sich aufgrund eines Teils der Daten bestimmt.

Das Verfahren ist einfach implementierbar und erreicht die bereits zur erfindungsgemäßen Brückeneinrichtung angegebenen Vorteile, wobei es derart flexibel ist, dass die FIFO-Einrichtungen synchron oder asynchron betrieben werden können.

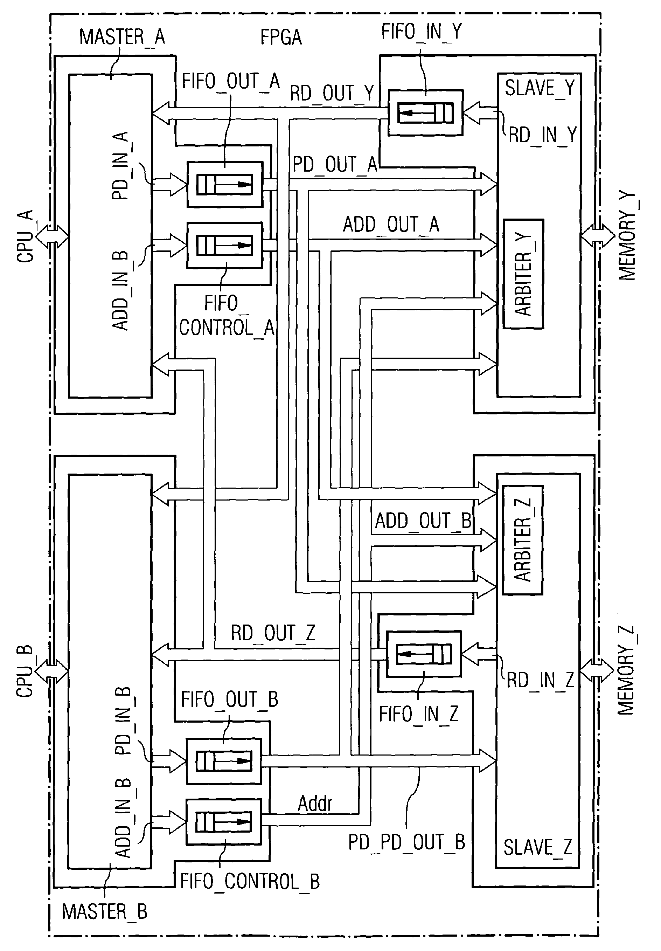

Weitere Einzelheiten und Vorteile der Erfindung werden anhand der Beschreibung eines in der einzigen Figur dargestellten Ausführungsbeispiels aufgezeigt. Dabei zeigt die FIGUR ein Layout einer erfindungsgemäßen Einrichtung.

In der FIGUR ist eine mögliche Implementierung der erfindungsgemäßen Einrichtung dargestellt. Dabei handelt es sich um eine Schaltungsanordnung, die als zentrale Brückeneinrichtung FPGA ausgestaltet und in einer Multiprozessor/Multiserver-Karte eingesetzt werden kann.

Bei dem betrachteten Ausführungsbeispiel handelt es sich um eine Multiprozessorkarte, bei der zwei zentrale Steuereinheiten CPU_A, CPU_B mit zwei Speichereinrichtungen MEMORY_Y, MEMORY_Z durch die erfindungsgemäße Brückeneinrichtung FPGA verbunden werden.

Hierbei sind die Master/Slave Rollen eindeutig zugeordnet. D.h. die zentralen Steuereinrichtungen haben eindeutig eine Masterrolle, während die Speichereinrichtungen eine passive und damit eine Slaverolle erfüllen. Nicht dargestellt aber ebenso durch die Erfindung möglich, ist es, Einrichtungen mit der Brückeneinrichtung FPGA zu verbinden, die eine wechselnde Rollenverteilung aufweisen. Eine derartige Einrichtung ist beispielsweise ein PCI-BUS-Controller.

Zu erkennen ist des Weiteren die interne Struktur der Brückeneinrichtung FPGA, bestehend aus einer Vielzahl von FIFO-Einrichtungen (FIFOs) FIFO_A_OUT..FIFO_Z_IN sowie durch die FIFO-Einrichtungen FIFO_A_OUT..FIFO_Z_IN miteinander verbundenen internen Funktionsblöcken MASTER_A..SLAVE_Z.

Im Detail ist ersichtlich, dass sich die Funktionsblöcke MASTER_A..SLAVE_Z in eine erste als Master funktionierende Einrichtung MASTER_A und eine zweite als Master funktionierende MASTER_B Einrichtung sowie eine erste als Slave funktionierende Einrichtung SLAVE_Y und eine zweite als Slave funktionierende Einrichtung SLAVE_Z unterscheiden lassen.

Des Weiteren ist ersichtlich, dass sich die FIFO-Einrichtungen in FIFO-Einrichtungen zur Adressierung bzw. Steuerung von Funktionsblöcken (Adress/Control-FIFO) sowie FIFO-Einrichtungen zur reinen Datenübertragung, d.h. zum Einschreiben und Auslesen von Funktionsblöcken, (In/Out-FIFO) unterscheiden lassen. Erfindungsgemäß ist dabei jeder Master MASTER_A..MASTER_B mit mehreren Slaves (Agenten) SLAVE_Y, SLAVE_Z über Adress/Control-EIFOs FIFO_A_CONTROL, FIFO_B_CONTROL verbunden.

Sämtliche FIFOs sind hierbei erfindungsgemäß als sogenannte single-input/shared-output FIFO ausgestaltet. D.h. jedes FIFO FIFO_A_CONTROL, FIFO_B_CONTROL hat einen Eingang der genau mit einem Funktionsblock, und einen Ausgang, der mit mehreren Funktionsblöcken verbunden ist. Beispielsweise wird der Eingang des ersten Adress/Control FIFOs FIFO_A_CONTROL durch den ersten Master MASTER_A mit Adressdaten über einen Adresszweig des internen Datenbusses ADD IN A beschrieben, während über seinen Ausgang entsprechende ausgehende Adressdaten auf einem weiteren Adresszweig ADD_OUT_A zum ersten Slave SLAVE_Y und zum zweiten Slave SLAVE_Z gelangen. Die ausgehenden Adressdaten stehen somit beiden Slaves SLAVE_Z, SLAVE_Y zur Verfügung.

Da die beiden Slaves SLAVE_Y, SLAVE_Z zudem über einen dritten Adresszweig ADD_OUT_B auch ausgehende Adressdaten des zweiten Adress/Control-FIFOs FIFO_B_COTNROL erhalten, ist zu jedem Slave Funktionsblock SLAVE_Y und SLAVE_Z eine Arbitrierungseinrichtung ARBITER_Y, ARBITER_Z vorgesehen, die jeweils mit den beiden Adresszweigen ADR_OUT_A, ADR_OUT_B verbunden sind und die jeweiligen Zugriffe der Master MASTER_A, MASTER_B auf den ersten Slave SLAVE_Y und/oder zweiten SLAVE_Z arbitrieren.

Erfindungsgemäß ist jeder Master MASTER_A, MASTER_B auch jeweils mit mehreren, gemäß Ausführungsbeispiel mit beiden Slaves SLAVE_Y, SLAVE_Z über In/Out-FIFOs FIFO_A_OUT, FIFO_B_OUT derart verbunden, dass deren Eingänge jeweils mit genau einem Master MASTER_A, MASTER_B und deren Ausgänge mit beiden Slaves SLAVE_Y, SLAVE_Z über Datenzweige des internen Busses PD_OUT_A, PD_OUT_B gleichzeitig verbunden sind. Über diese Verbindung werden die erforderlichen Daten, wie beispielsweise die zu schreibenden Daten sowie ein "byte-select" Datum, an die Slaves SLAVEY, SLAVE_Z übertagen, um vom FIFO Daten in die Slaves SLAVE_Y, SLAVE_Z bzw. an diese angeschlossene zu der Brückeneinrichtung FPGA externe Entitäten zu schreiben.

Da an jedes Slave SLAVE_Y, SLAVE_Z hierzu mehrere Datenzweige PD_OUT, PD_IN gelegt sind, ist auch hierfür eine Arbitrierung erforderlich. Die hierfür erfindungsgemäß vorgesehenen Arbitrierungseinrichtungen sind jedoch zur Wahrung der Übersichtlichkeit nicht dargestellt.

Arbitrierungseinrichtungen, die in den Mastereinrichtungen MASTER_A, MASTER_B erforderlich sind, wurden aus dem gleichen Grund nicht dargestellt.

Diese in den Mastereinrichtungen MASTER_A, MASTER_B erforderlichen Arbitrierugseinrichtungen sind erfindungsgemäß vorgesehen, da auch an ihnen mehrere Datenzweige RD_OUT_Y, RD_OUT_Z angeschlossen sind, welche die zum Lesen von Daten bestimmten In/Out-FIFOs FIFO_IN_Y, FIFO_IN_Z mit Daten versorgen, so dass ein Auslesen der Mastereinrichtungen bzw. von an ihnen angeschlossenen zur Brückeneinrichtung FPGA externen Entitäten realisiert wird.

Die Arbitrierungseinrichtungen, welche erfindungsgemäß sowohl in den Slaveeinrichtungen SLAV_Y, SLAVE_Z als auch in den Mastereinrichtungen MASTER_A, MASTER_B integriert sind, arbeiten unter Ausnutzung eines Auswahlsignals der jeweiligen Adress/Control FIFOs FIFO_CONTROL_A, FIFO_CONTORL_B zur Prüfung des jeweiligen Busses ("bus validation"). Das Auswahlsignal wird zur Auswertung mit einem Gültigkeitssignal des jeweiligen FIFOs ("FIFO valid signal") logisch verknüpft, so dass ein Anstoß eines Vorgangs zum Auslesen von Daten bei einem leeren FIFO vermieden wird. Auch das Auswahl- und Gültigkeitssignal der In/Out-FIFOs FIFO_ IN_Y, FIFO_IN_Z wird von Arbitrierungseinrichtungen ausgewertet, um sicherzustellen, dass eine Datenübertragungsphase in einer als Datensenke funktionierenden Entität nicht angestoßen wird, solange noch Daten im Rahmen eines Schreibvorgangs geschrieben werden.

Werden die FIFOs als synchrone FIFOs ausgestaltet, so ist es möglich, dass die Adress/Control FIFOs FIFO_A_CONTROL, FIFO_B_CONTROL zu einem frühen Zeitpunkt entleert werden. Dies ist solange möglich, wie eine Slave Arbitrierungseinrichtung ARBITERY, ARBITER_Z sicherstellen kann, dass an die Arbitrierungseinrichtungen ARBITER_Y, ARBITER_Z gerichtete Daten auch im Falle gescheiterter Übertragungen entleert werden.

Diese Vorgehensweise verhindert ein Auftreten von Blockaden zwischen Adress/Control-FIFOs und In/Out-FIFOs.

Es sei angemerkt, dass die Erfindung nicht auf das dargestellte Beispiel beschränkt ist. So ist es zum Beispiel gemäß der Erfindung möglich, wesentlich mehr zentrale Steuereinheiten mit Speichereinheiten zu verbinden. Auch sind andere Verteilungen denkbar. So erlaubt es die Erfindung beispielsweise auch, dass zwei zentrale Steuereinrichtungen auf drei Speichereinrichtungen zugreifen. Fachübliche Variationen sollen ebenfalls durch die Erfindung mit erfasst sein.

## Patentansprüche

1. Einrichtung, insbesondere Brückeneinrichtung (FPGA), zur Kopplung zumindest einer aktiven, insbesondere als Master funktionierenden Einrichtung (CPU A, CPU_B) sowie einer Vielzahl von passiven, insbesondere als Slave funktionierenden, Einrichtungen (MEMORY_Y, MEMORY_Z), **gekennzeichnet durch**,
a) eine Vielzahl von FIFO-Einrichtungen,
b) zumindest eine erste jeweils einem Master (CPU_A, CPU_B) zugeordnete erste Schnittstelleneinrichtung (MASTER_A, MASTER_B),
c) zumindest eine zweite jeweils einem Slave (MEMORY_Y, MEMORY_Z) zugeordnete Schnittstelleneinrichtung (SLAVE_Y, SLAVE_Z),
d) einen Eingang einer FIFO-Einrichtung, der (FIFO_A_OUT..FIFO_Z_IN) jeweils mit genau einer der ersten Schnittstelleneinrichtungen (MASTER_A, MASTER_B) oder einer der zweiten Schnittstelleinrichtungen (SLAVE_Y, SLAVE_Z) verbunden ist,
e) einen Ausgang der FIFO-Einrichtung, der (FIFO_A_OUT..FIFO_Z_IN) mit zumindest einer Einrichtung zur Arbitrierung (ARBITER_Y, ARBITER_Z) verbunden ist, wobei am Ausgang der FIFO-Einrichtungen (FIFO_A_OUT..FIFO_Z_IN) anstehende Daten allen mit ihnen verbundenen Arbitrierungseinrichtungen (ARBITER_Y, ARBITER_Z) zur Verfügung stehen, wobei
f) die Arbitrierungseinrichtungen (ARBITER_Y, ARBITER_Z) derart ausgestaltet sind, dass aufgrund einer Auswertung zumindest eines Teils der Daten, eine Arbitrierungseinrichtung (ARBITER_Y, ARBITER_Z) zur Aktivierung bestimmt wird.

2. Einrichtung nach Anspruch 1, **dadurch gekennzeichnet, dass** der eindeutig zugeordnete Eingang der jeweiligen FIFO-Einrichtung (FIFO_A_OUT..FIFO_Z_IN) als Eingang der Brückeneinrichtung (FPGA) und zumindest ein Ausgang der Arbitrierungseinrichtung als Ausgang der Brückeneinrichtung (FPGA) ausgestaltet sind.

3. Einrichtung nach Anspruch 1 oder 2, **dadurch gekennzeichnet, dass** zumindest eine Arbitrierungseinrichtung (ARBITER_Y, ARBITER_Z) in die erste Schnittstelleneinrichtung (MASTER_ A, MASTER_B) und/oder zweite Schnittstelleneinrichtung (SLAVE_Y, SLAVE_Z) integriert ist.

4. Einrichtung nach einem der vorhergehenden Ansprüche, **dadurch gekennzeichnet, dass** die FIFO-Einrichtung derart ausgestaltet ist, dass für einen Zugriff auf die zweiten Schnittstelleinrichtungen (SLAVE_Y, SLAVE_Z) Nutzdaten gespeichert werden.

5. Einrichtung nach einem der vorhergehenden Ansprüche, **dadurch gekennzeichnet, dass** die FIFO-Einrichtung derart ausgestaltet ist, dass für einen Zugriff auf die zweiten Schnittstelleinrichtungen (SLAVE_Y, SLAVE_Z) Steuerdaten gespeichert werden.

6. Einrichtung nach einem der vorhergehenden Ansprüche, **dadurch gekennzeichnet, dass** die erste Schnittstelleneinrichtung (MASTER_A, MASTER_B) und zweite Schnittstelleneinrichtungen (SLAVE_Y, SLAVE_Z) derart ausgestaltet sind, dass sie sowohl als Master als auch Slave funktionierende Einrichtungen an die Brückeneinrichtung (FGPA) koppeln.

7. Verfahren zur Kopplung zumindest einer aktiven, insbesondere als Master funktionierenden Einrichtung (CPU A, CPU_B) sowie einer Vielzahl von passiven, insbesondere als Slave funktionierenden, Einrichtungen (MEMORY_Y, MEMORY_Z) eines Kommunikationssystems, **dadurch gekennzeichnet, dass**
a) in einer Brückeneinrichtung (FPGA) jedem Master (CPU_A, CPU_B) eine erste Schnittstelleinrichtung (MASTER_A, MASTER_B) sowie jedem Slave (MEMORY_Y, MEMORY_Z) eine zweite Schnittstelleneinrichtung (SLAVE_Y, SLAVE_Z) zugeordnet wird,
b) ein Eingang einer FIFO-Einrichtung (FIFO_A_OUT..FIFO_Z_IN) genau einer ersten Schnittstelleneinrichtung (MASTER_A, MASTER_B) oder zweiten Schnittstelleneinrichtung (SLAVE_Y, SLAVE_Z) zugeordnet wird,
c) jeder Ausgang der FIFO-Einrichtung (FIFO_A_OUT..FIFO_Z_IN) mit zumindest einer Einrichtung zur Arbitrierung (ARBITER_Y, ARBITER_Z) verbunden wird, wobei zu verarbeitende Daten am Ausgang allen verbundenen Arbitrierungseinrichtungen (ARBITER_Y, ARBITER_Z) zur Verfügung stehen, wobei eine für die Verteilung der Daten vorgesehene Arbitrierungseinrichtung (ARBITER_Y, ARBITER_Z) sich aufgrund eines Teils der Daten bestimmt.

8. Verfahren nach Anspruch 1 **dadurch gekennzeichnet**, da s s die FIFO-Einrichtungen (FIFO_A_OUT..FIFO_Z_IN) asynchron betrieben werden.

9. Verfahren nach Anspruch 1, **dadurch gekennzeichnet**, da s s die FIFO-Einrichtungen (FIFO_A_OUT..FIFO_Z_IN) synchron betrieben werden.
